# FASCICULE DE BREVET EUROPEEN

(11) **EP 2 622 181 B1**
(45) Date de publication et mention de la délivrance du brevet: **18.03.2015**
(21) Numéro de dépôt: 11773784.1
(22) Date de dépôt: 27.09.2011
(51) Int. Cl.: F01D 21/04, F02C 7/00

(54) **MOTEUR A TURBINE A GAZ COMPRENANT DES MOYENS DE RETENTION AXIALE D'UNE SOUFFLANTE DUDIT MOTEUR**
GASTURBINENMOTOR MIT VORRICHTUNG ZUR AXIALEN FIXIERUNG EINES LÜFTERS DES MOTORS
GASTURBINE ENGINE WITH MEANS OF AXIAL RETENTION OF THE ENGINE FAN

(30) Priorité: 28.09.2010 FR 1057814
(43) Date de publication de la demande: 07.08.2013
(73) Titulaire: Snecma, 75015 Paris (FR)
(72) Inventeur: GEREZ, Valerio, F-91330 Yerres (FR); BALK, Wouter, F-77000 Melun (FR); JADCZAK, Edouard, Joseph, F-77350 Le Mee Sur Seine (FR)
(74) Mandataire: Gevers France
(86) Numéro de dépôt international: PCT/FR2011/052242
(87) Numéro de publication internationale: WO 2012/042161

(56) Documents cités:
- EP-A1- 1 605 139
- EP-A2- 0 965 731
- FR-A1- 2 752 024
- FR-A1- 2 888 621

## Description

Le domaine de l'invention est celui des turbomoteurs à gaz pour aéronefs. L'invention concerne plus particulièrement un système de rétention d'une soufflante d'un turbomoteur en cas de rupture d'un arbre d'entraînement de la soufflante.

Dans une situation d'urgence, il est nécessaire de protéger le moteur afin que l'aéronef puisse être détourné vers l'aéroport le plus proche. En cas de perte partielle ou totale d'une aube de soufflante, la soufflante est déséquilibrée et oscille. Ce phénomène est connu de l'homme du métier sous la désignation « d'orbitage de la soufflante ». Ces oscillations génèrent des efforts importants qui peuvent engendrer des dégâts collatéraux. Pour garantir la sécurité et éviter de tels dégâts, il faut tenir compte des efforts lors du dimensionnement des structures du moteur et de l'avion, ce qui rend le moteur plus lourd par rapport à un moteur standard qui est conçu uniquement pour supporter des efforts au cours de vols normaux. Pour limiter les charges dynamiques de la soufflante et pour alléger le moteur, on connaît par la demande de brevet FR 2877046 de la société SNECMA un dispositif de découplage qui permet de limiter les efforts à haut régime. En pratique, pour un turbomoteur à double corps comprenant un arbre basse pression et un arbre haute pression, le système de découplage est agencé pour découpler les paliers qui supportent l'arbre basse pression d'entraînement de la soufflante par rapport au carter intermédiaire, ces paliers étant connus de l'homme du métier sous la désignation « palier 1 » et « palier 2 ».

Après découplage de la soufflante, la situation modale du moteur est dite « hypercritique », le seul mode de fonctionnement du moteur est alors à bas régime. De manière avantageuse, les charges dynamiques des structures fixes sont alors fortement réduites à haut régime. A haut régime, les charges dynamiques dans l'arbre demeurent importantes et le risque de rupture de l'arbre d'entraînement basse pression augmente. Le document EP1605139 montre un système de retenue axiale du rotor.

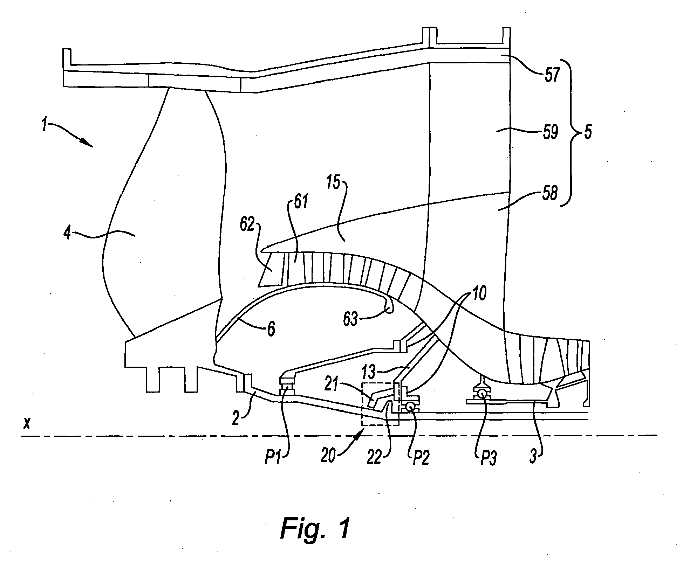

En référence à la figure 1, un moteur 1 à double corps et à double flux comporte un arbre basse pression 2 solidaire d'une soufflante 4 et un arbre haute pression 3 rotatifs autour d'un axe X du moteur. Par la suite, les termes « amont » et « aval » sont définis par rapport à la circulation des gaz dans le moteur, les gaz circulant depuis l'amont vers l'aval. De même, par convention dans la présente demande, les termes « intérieur » et « extérieur » sont définis radialement par rapport à l'axe X du moteur représenté sur la figure 1. Ainsi, un cylindre s'étendant selon l'axe du moteur comporte une face intérieure tournée vers l'axe du moteur et une surface extérieure, opposée à sa surface intérieure.

Toujours en référence à la figure 1, l'arbre basse pression 2 est guidé en rotation dans un carter intermédiaire 5 du moteur 1 par des paliers P1, P2 connus respectivement de l'homme du métier sous la désignation « palier 1 » et « palier 2 ». En référence à la figure 1, le carter intermédiaire 5 comporte une virole extérieure 57 et un moyeu intérieur 58 reliés par des bras structuraux 59. L'arbre haute pression 3 est guidé en rotation dans le carter intermédiaire 5 du moteur 1 par un palier P3 connu de l'homme du métier sous la désignation « palier 3 ». Comme représenté sur la figure 1, le moteur 1 comporte un carter de séparation 15, appelé également « bec de séparation », solidaire du moyeu 58 du carter intermédiaire 5, agencé pour guider intérieurement un flux primaire et extérieurement un flux secondaire. Le moteur 1 comporte en outre un compresseur basse pression, connu de l'homme du métier sous sa désignation anglaise « booster », qui comporte des aubes statoriques 62 solidaires du carter de séparation 15 et des aubes mobiles 61 solidaires d'un tambour d'entraînement 6 pour compresser le flux primaire circulant d'amont en aval dans le moteur 1. Un dispositif de découplage 10 est disposé entre le moyeu 58 du carter intermédiaire 5, et les paliers P1, P2 afin d'assouplir la structure du moteur en mode hypercritique comme expliqué précédemment.

En cas de rupture de l'arbre basse pression 2 en aval du palier P2, il est prévu un dispositif attrapeur 20, connu sous sa désignation anglaise « catcher », qui permet de retenir axialement la partie amont de l'arbre basse pression 2 solidaire de la soufflante 4. Ce dispositif attrapeur 20 comprend d'une part une virole 21 s'étendant radialement vers l'intérieur depuis le moyeu 58 du carter intermédiaire 5 et d'autre part une couronne annulaire 22 s'étendant radialement vers l'extérieur depuis l'arbre basse pression 2. Ainsi, en cas de rupture de l'arbre basse pression 2 en aval du palier P2, la partie de l'arbre basse pression 2 située en amont de la zone de rupture se déplace vers l'amont si bien que la couronne annulaire 22 entre en contact avec la virole 21 pour la retenir axialement. Autrement dit, la partie amont de l'arbre basse pression 2 est « attrapée » par le dispositif attrapeur 20 en cas de rupture de l'arbre basse pression 2.

Un tel dispositif attrapeur 20 est satisfaisant en cas de rupture de l'arbre basse pression 2 en aval du palier P2 mais est inefficace en cas de rupture en amont dudit palier P2. Ainsi, les aubes statoriques 62 ne sont pas capables de retenir les aubes mobiles 61 du tambour 6 en cas de rupture de l'arbre basse pression 2.

Afin d'éliminer au moins certains des inconvénients précédemment cités, l'invention concerne un moteur à turbine à gaz comprenant un carter dans lequel est monté au moins un arbre d'entraînement d'une soufflante solidaire d'un tambour d'entraînement muni d'aubes pour compresser un flux d'air circulant d'amont en aval dans le moteur, le moteur comprenant des moyens de rétention axiale, en attente, solidaires du carter et agencés pour entrer en contact avec le tambour d'entraînement de manière à empêcher un déplacement axial dudit tambour en cas de rupture de l'arbre d'entraînement.

Grâce à l'invention, l'arbre d'entraînement est retenu axialement, de manière indirecte, via le tambour d'entraînement solidaire de la soufflante. Les moyens de rétention permettent d'attraper l'ensemble « tambour-soufflante-arbre basse pression » de manière fiable, la zone de rupture de l'arbre d'entraînement étant indifférente. Ainsi, même si l'arbre se rompt à proximité immédiate de la soufflante, la soufflante n'est pas éjectée vers l'amont mais retenue par le tambour. Les inconvénients de l'art antérieur sont ainsi éliminés.

De manière avantageuse, c'est la forme du tambour qui participe à la rétention axiale et il n'est pas nécessaire d'ajouter des moyens spécifiques au tambour pour réaliser la fonction de rétention.

De préférence, le tambour d'entraînement comporte des moyens de butée agencés pour entrer en contact avec les moyens de rétention axiale, les moyens de butée étant formés par une partie aval du tambour d'entraînement, de préférence, son extrémité aval. Cela permet de manière avantageuse de retenir le tambour à proximité du carter du moteur, l'encombrement des moyens de rétention étant ainsi limité. De manière préférée, les moyens de butée s'étendent radialement vers l'intérieur du moteur.

Par nature, l'extrémité aval du tambour est épaissie ou renforcée pour résister aux efforts centrifuges subis par le tambour en rotation. Cette extrémité aval du tambour est donc adaptée pour former les moyens de butée du fait de sa rigidité et sa résistance aux déformations.

Selon un aspect préféré de l'invention, les moyens de rétention axiale, en attente, s'étendent à l'intérieur du tambour. De manière avantageuse, c'est uniquement lorsque le tambour se déplace axialement que les moyens de butée sont sollicités, c'est-à-dire activés pour remplir la fonction de rétention. Il n'est ainsi pas nécessaire de prévoir un dispositif complexe pour mettre en attente les moyens de rétention.

De préférence, le tambour d'entraînement comportant une partie bombée radialement, les moyens de rétention axiale, en attente, sont en regard de la partie bombée. De manière très avantageuse, la forme du tambour d'entraînement permet de mettre en attente les moyens de rétention en conditions normales d'utilisation, les moyens de rétention étant positionnés dans la partie bombée du tambour. La forme du tambour d'entraînement permet en outre d'activer les moyens de rétention en fonctionnement hypercritique, les moyens de rétention entrant en contact avec l'extrémité aval du tambour. En cas de rupture de l'arbre, le tambour se déplace axialement. Les moyens de rétention axiale sont alors en regard d'une partie aval du tambour et entrent en contact avec cette dernière. La forme bombée permet avantageusement d'amortir le choc axial.

Selon un aspect de l'invention, les moyens de rétention axiale comprennent au moins un doigt de rétention aligné longitudinalement avec une partie aval du tambour d'entraînement de manière à empêcher un déplacement axial dudit tambour en cas de rupture de l'arbre d'entraînement. De préférence, le doigt de rétention s'étend radialement vers l'extérieur du moteur.

Selon un autre aspect de l'invention, les moyens de rétention axiale comportent un revêtement abradable destiné à entrer en contact avec le tambour d'entraînement. De préférence, le revêtement abradable est disposé sur la surface aval et/ou la surface supérieure du doigt de rétention de manière à amortir un choc axial et/ou radial.

De préférence, le doigt de rétention est articulé par rapport au carter de manière à définir :
- une position de montage, dans laquelle le doigt de rétention est décalé radialement par rapport au tambour d'entraînement de manière à permettre un déplacement axial dudit tambour, et
- une position de fonctionnement dans laquelle le doigt de rétention est aligné longitudinalement avec le tambour d'entraînement de manière à empêcher un déplacement axial dudit tambour en cas de rupture de l'arbre d'entraînement.

De manière avantageuse, un doigt de rétention articulé permet d'autoriser un déplacement axial du tambour d'entraînement au cours du montage tout en l'interdisant en fonctionnement. De manière préférée, le doigt de rétention articulé est monté pivotant par rapport au carter. Ainsi, l'encombrement radial du doigt de rétention est diminué, en position de montage, en comparaison à sa position de fonctionnement.

Selon un mode de réalisation particulier de l'invention, les moyens de rétention comportant une virole de rétention annulaire crénelée s'étendant radialement vers l'extérieur et comportant des doigts de rétention séparés par des ouvertures de rétention, le tambour d'entraînement comportant une virole de butée annulaire crénelée s'étendant radialement vers l'intérieur et comportant des dents de butée séparées par des ouvertures de butée, les dents de butée sont agencées pour entrer en contact avec les doigts de rétention de manière à empêcher un déplacement axial dudit tambour en cas de rupture de l'arbre d'entraînement.

De manière avantageuse, le montage du tambour est facilité en faisant coopérer les créneaux des moyens de rétention avec ceux des moyens de butée de manière à autoriser un déplacement axial du tambour.

De préférence encore, au moins un doigt de rétention est incliné par rapport à un plan axial traversant ledit doigt. Autrement dit, la partie amont du doigt est décalée angulairement par rapport à sa partie aval.

De préférence encore, au moins une dent de butée est inclinée par rapport à un plan axial traversant ladite dent. De manière avantageuse, un doigt et/ou une dent incliné interdit un déplacement axial du tambour, seule une translation oblique étant autorisée.

Selon un aspect, au moins un doigt de rétention est incliné selon la même orientation qu'au moins une dent inclinée.. De par leurs mêmes orientations, le doigt de rétention peut coopérer avec les ouvertures des créneaux du tambour lors du montage.

De préférence, l'arbre d'entraînement de la soufflante étant agencé pour être entraîné en rotation au cours de son fonctionnement selon un premier sens de rotation, le tambour est agencé pour être monté de l'amont vers l'aval dans le moteur en réalisant une rotation du tambour dans le même sens de rotation que le premier sens de rotation de l'arbre de fonctionnement. En cas de rupture de l'arbre en aval de la soufflante, le tambour se déplace vers l'amont tout en tournant selon le premier sens de rotation ce qui interdit la coopération d'un doigt de rétention avec les ouvertures des créneaux du tambour. Autrement dit, l'inclinaison de la dent de butée et du doigt de rétention est définie par rapport au sens de rotation de l'arbre afin d'empêcher tout défaut de rétention en cas de rupture de l'arbre.

De manière préférée, l'arbre d'entraînement de la soufflante est agencé pour être entraîné en rotation dans le sens horaire vu de l'arrière.

L'invention sera mieux comprise à l'aide de la description non-limitative suivante de formes de réalisation préférées de l'invention, en référence au dessin annexé, sur lequel :
- la figure 1 est une représentation schématique en coupe axiale d'un moteur selon l'art antérieur (déjà commentée) ;
- la figure 2 est une représentation schématique en coupe axiale d'un moteur avec une soufflante comportant des moyens de rétention axiale de la soufflante selon une première forme de réalisation de l'invention ;
- la figure 3A est une vue rapprochée de la figure 2, des plans de coupe K1-K1 et Q1-Q1 étant représentés ;
- la figure 3B est une représentation schématique vue de l'amont des moyens de rétention selon la première forme de réalisation selon les plans de coupe K1-K1 et Q1-Q1;
- la figure 4 est une représentation schématique en coupe axiale d'un moteur avec une soufflante comportant des moyens de rétention axiale de la soufflante selon une deuxième forme de réalisation de l'invention, les moyens de rétention étant en position de montage ;
- la figure 5A est une vue rapprochée de la figure 4, les moyens de rétention étant en position d'utilisation, des plans de coupe K2-K2 et Q2-Q2 étant représentés ;
- la figure 5B est une représentation schématique vue de l'amont des moyens de rétention selon la deuxième forme de réalisation selon les plans de coupe K2-K2 et Q2-Q2 ;
- la figure 6 est une représentation schématique en coupe axiale d'un moteur avec une soufflante comportant des moyens de rétention axiale de la soufflante selon une troisième forme de réalisation de l'invention ;
- la figure 7 est une représentation schématique vue de l'avant des moyens de rétention selon la troisième forme de réalisation comportant des doigts de rétention inclinés, un plan axial Y-Y étant également représenté ;
- la figure 8 représente schématiquement une vue de dessus des doigts de rétention inclinés de la figure 7, le plan axial Y-Y étant également représenté ;
- la figure 9A représente une première position angulaire d'un tambour d'entraînement du moteur vu de l'amont par rapport aux doigts de rétention inclinés de la figure 7 ;
- la figure 9B représente une deuxième position angulaire du tambour d'entraînement par rapport aux doigts de rétention inclinés de la figure 7 ; et
- la figure 9C représente une troisième position angulaire du tambour d'entraînement par rapport aux doigts de rétention inclinés de la figure 7.

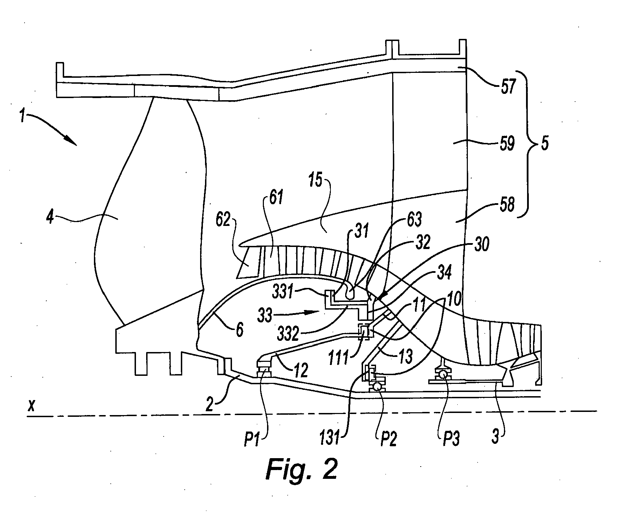

En référence aux figures 2, 4 et 6, un moteur 1 à double corps comporte un arbre basse pression 2 solidaire d'une soufflante 4 et un arbre haute pression 3 qui sont entraînés autour d'un axe X du moteur 1, l'arbre basse pression 2 étant guidé en rotation dans un carter intermédiaire 5 du moteur 1 par des paliers P1, P2 connus respectivement de l'homme du métier sous la désignation « palier 1 » et « palier 2 ». Le carter intermédiaire 5 comporte une virole extérieure 57 et un moyeu intérieur 58 reliés par des bras structuraux 59. L'arbre haute pression 3 est guidé en rotation dans le carter intermédiaire 5 du moteur 1 par un palier P3 connu de l'homme du métier sous la désignation « palier 3 ». Le moteur est à double flux et comporte un carter de séparation 15, solidaire du moyeu 58 du carter intermédiaire 5, agencé pour guider intérieurement un flux primaire et extérieurement un flux secondaire.

Par la suite, les termes « amont » et « aval » sont définis par rapport à la circulation des gaz dans le moteur, les gaz circulant depuis l'amont vers l'aval. De même, par convention dans la présente demande, les termes « intérieur » et « extérieur » sont définis radialement par rapport à l'axe X du moteur représenté sur les figures 2, 4 et 6. Ainsi, un cylindre s'étendant selon l'axe du moteur comporte une face intérieure tournée vers l'axe du moteur et une surface extérieure, opposée à sa surface intérieure.

Le moteur 1 comporte en outre un compresseur basse pression, connu de l'homme du métier sous sa désignation anglaise « booster », qui comporte des aubes statoriques 62 solidaires du carter de séparation 15 et des aubes mobiles 61 solidaires d'un tambour d'entraînement 6 pour compresser un flux d'air primaire circulant d'amont en aval dans le moteur 1. Le tambour d'entraînement 6 est solidaire de l'arbre basse pression 2 du moteur 1 pour permettre l'entraînement des aubes mobiles 61.

De manière similaire à un moteur selon l'art antérieur, le moteur 1 comporte un dispositif de découplage 10 disposé entre le carter de séparation 15, solidaire du carter intermédiaire 5, et les paliers P1, P2 afin d'assouplir la structure du moteur en mode hypercritique comme expliqué précédemment.

En référence aux figures 2, 4 et 6, le dispositif de découplage 10 comporte une partie primaire agencée pour découpler le premier palier P1 et une partie secondaire pour découpler le deuxième palier P2. La partie primaire comporte un élément d'interface primaire 12, de forme cylindrique, sensiblement évasé de l'amont vers l'aval et qui est relié, d'une part, au premier palier P1 et, d'autre part, à une virole annulaire primaire 11 s'étendant radialement depuis le moyeu 58 du carter intermédiaire 5 vers l'intérieur du moteur 1. La virole annulaire primaire 11 est reliée à l'élément d'interface primaire 12 par une liaison sécable primaire 111 agencée pour rompre en cas d'incident. La partie secondaire comporte pour sa part un élément d'interface secondaire 13, de forme cylindrique, sensiblement évasé de l'amont vers l'aval et qui est relié, d'une part, au deuxième palier P2 et, d'autre part, au moyeu 58 du carter intermédiaire 5. L'élément d'interface primaire 12 est relié au deuxième palier P2 par une liaison sécable secondaire 131 agencée pour rompre en cas d'incident. Ainsi, en cas de sollicitation excessive, l'élément d'interface primaire 12 se désolidarise de la virole annulaire primaire 11 et l'élément d'interface secondaire 13 se désolidarise du deuxième palier P2. Les paliers P1, P2 sont alors découplés.

Selon l'invention, le moteur 1 comprend des moyens de rétention axiale, en attente, solidaires du carter 5 du moteur qui sont agencés pour entrer en contact avec le tambour d'entraînement 6 de manière à le retenir axialement en cas de rupture de l'arbre basse pression 2. En référence aux figures 2, 4 et 6, les moyens de rétention 30, 40, 50 sont solidaires du moyeu 58 du carter intermédiaire 5 de manière à pouvoir attraper l'arbre d'entraînement basse pression 2 de manière indirecte via le tambour d'entraînement 6.

Contrairement à l'art antérieur dans lequel l'arbre basse pression 2 est attrapé directement via un dispositif attrapeur solidaire de l'arbre basse pression 2, les moyens de rétention 30, 40, 50 selon l'invention sont agencés pour entrer en contact avec le tambour d'entraînement de manière à le retenir axialement en cas de rupture de l'arbre d'entraînement. Autrement dit, la rétention axiale de l'arbre basse pression 2 est indirecte. Les moyens de rétention 30, 40, 50 permettent de retenir l'arbre basse pression 2 indifféremment de la zone de rupture. Ainsi, même si l'arbre basse pression 2 se rompt à proximité immédiate de la soufflante 4, celle-ci est retenue axialement via le tambour d'entraînement 6.

En référence aux figures 2, 4 et 6, l'invention est présentée pour un tambour d'entraînement 6 s'étendant axialement selon l'axe X du moteur 1 et possédant une forme globalement cylindrique. Le tambour d'entraînement 6 est évasé de l'amont vers l'aval et comporte une extrémité amont solidaire de la soufflante 4 et une extrémité aval 63 s'étendant radialement vers l'intérieur. Autrement dit, le tambour d'entraînement 6 est bombé radialement dans sa partie médiane de manière à permettre aux moyens de rétention 30, 40, 50 de s'étendre lorsque ces derniers sont en attente. Une partie bombée permet avantageusement d'amortir le choc lors du déplacement axial comme cela sera détaillé par la suite.

Le tambour d'entraînement 6 comporte ici des moyens de butée avec les moyens de rétention 30, 40, 50 qui sont agencés pour retenir l'arbre basse pression 2 du moteur 1. Dans cet exemple, l'extrémité aval 63 du tambour d'entraînement 6 est agencée pour entrer en butée avec les moyens de rétention 30, 40, 50 mais il va de soi que le tambour d'entraînement 6 pourrait comprendre des moyens de butée autres s'étendant, par exemple, depuis la partie bombée du tambour d'entraînement 6.

Comme représenté par exemple sur la figure 1, l'extrémité aval 63 du tambour d'entraînement 6 est plus épaisse que sa partie bombée et s'étend radialement vers l'intérieur pour résister aux efforts centrifuges subis par le tambour lors de sa rotation. L'extrémité aval 63 du tambour d'entraînement 6 présente par nature une résistance suffisante pour former les moyens de butée. Autrement dit, on tire partie de la forme du tambour et de ses caractéristiques pour former un système de rétention axiale efficace, de faible encombrement et sans modification du tambour 6.

De manière préférée, les moyens de rétention axiale 30, 40, 50, en attente, s'étendent à l'intérieur du tambour d'entraînement 6 et en regard de sa partie bombée. Ainsi, comme représenté sur les 2, 4 et 6, les moyens de rétention 30, 40, 50 en position d'attente n'entravent pas la rotation du tambour basse pression 6. C'est lors de la rupture de l'arbre basse pression 2 que les moyens de rétention 30, 40, 50 sont activés, le tambour d'entraînement 6 se déplaçant vers l'amont de sorte que son extrémité aval 63 entre en contact avec les moyens de rétention 30, 40, 50 comme cela sera détaillé par la suite.

Selon un aspect de l'invention, les moyens de rétention 30, 40, 50 comprennent un revêtement abradable 31, 41, 51 agencé pour amortir aussi bien un choc radial en cas de la perte d'une aube de soufflante 4 qu'un choc axial en cas de rupture de l'arbre basse pression 2. De préférence, le revêtement abradable 31, 41, 51 est appliqué sur la surface aval et/ou la surface supérieure desdits moyens de rétention.

A titre d'exemple, les moyens de rétention vont être présentés ci-dessous pour trois formes de réalisation préférées du moteur.

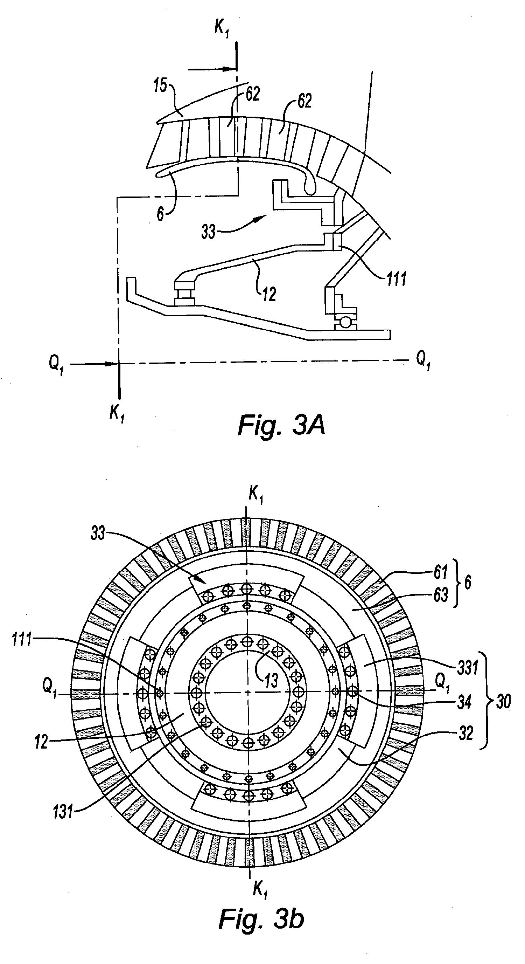

Selon une première forme de réalisation, en référence aux figures 2 et 3, le tambour d'entraînement 6 possède une extrémité aval 63 formant une couronne annulaire pleine 63 s'étendant radialement vers l'intérieur du moteur 1. La figure 3B représente le tambour d'entraînement 6 avec son dispositif de découplage 10 et ses moyens de rétention 30 vus de l'avant du moteur. Le tambour d'entraînement 6 comporte à sa périphérie des aubes mobiles 61 s'étendant depuis sa surface extérieure radialement vers l'extérieur, les éléments d'interface primaire 12 et secondaire 13 ainsi que les liaisons sécables 111, 131 de son dispositif de découplage 10 étant représentés partiellement sur la figure 3B.

Les moyens de rétention 30 selon cette première forme de réalisation de l'invention comportent une virole annulaire pleine 32 s'étendant radialement vers l'intérieur depuis le carter de séparation 15 et une pluralité de doigts de rétention 33 s'étendant radialement vers l'extérieur et qui sont solidaires de la virole annulaire pleine 32. Comme représenté sur la figure 3B, quatre doigts de rétention 33 sont répartis angulairement sur la virole annulaire pleine 32 et comprennent chacun une partie radiale 331 et une partie longitudinale 332 pour former un L dont l'extrémité aval de la partie longitudinale 332 est solidaire de la virole annulaire pleine 32 par une liaison 34 qui est ici boulonnée comme représenté sur la figure 2. Autrement dit, la partie radiale 331 du doigt de rétention 33 qui s'étend radialement vers l'extérieur est parallèle à la virole annulaire pleine 32 et décalée vers l'amont par rapport à cette dernière.

La surface extérieure de la partie longitudinale 332 et la surface aval de la partie radiale 331 du doigt de rétention 33 sont recouverts d'un revêtement abradable 31 de manière à amortir aussi bien un choc axial qu'un choc radial comme détaillé précédemment.

Comme représenté sur les figures 2 et 3, l'extrémité extérieure de la partie radiale 331 du doigt de rétention 33 est radialement extérieure à l'extrémité aval 63 du tambour d'entraînement 6 de manière à ce que, en cas de rupture de l'arbre basse pression 2 et déplacement axial du tambour d'entraînement 6 vers l'amont, l'extrémité aval 63 du tambour d'entraînement 6 entre en contact avec la partie radiale 331 des doigts de rétention 33 empêchant ainsi l'éjection du tambour 6 et de sa soufflante 4.

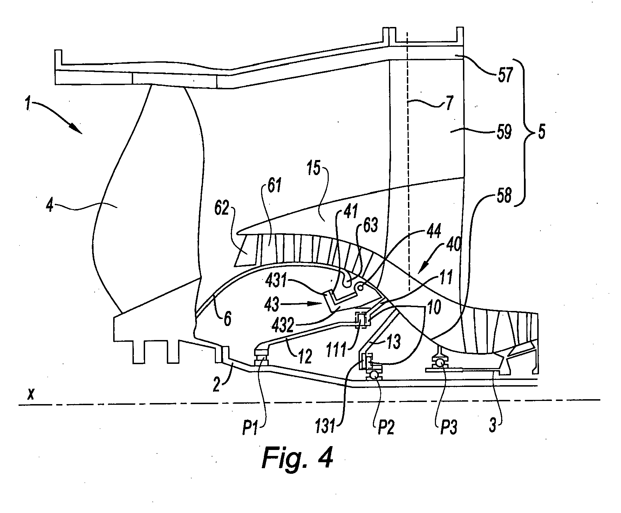

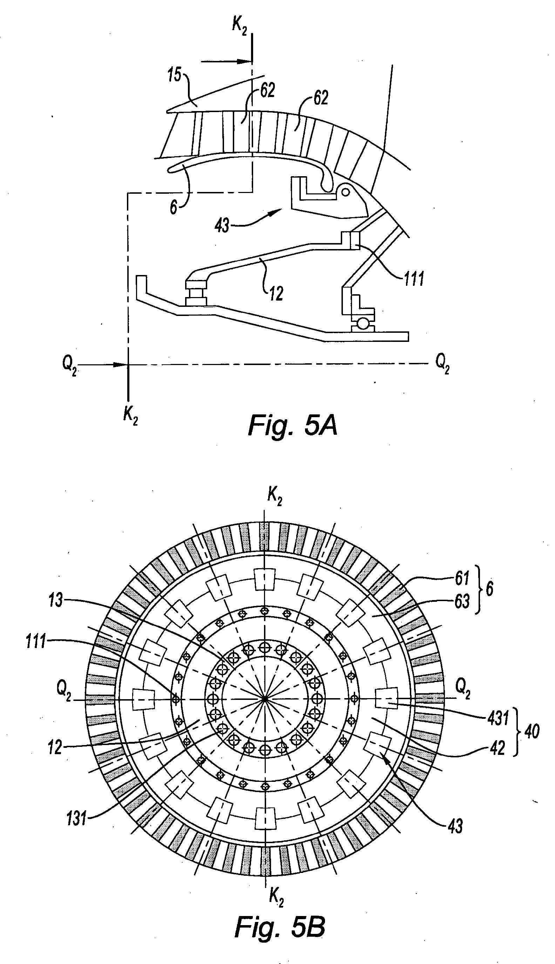

Selon une deuxième forme de réalisation, en référence aux figures 4 et 5, le tambour d'entraînement 6 possède une extrémité aval 63 formant une couronne annulaire pleine 63 s'étendant radialement vers l'intérieur du moteur 1. La figure 5B représente le tambour d'entraînement 6 avec son dispositif de découplage 10 et ses moyens de rétention 40, vue de l'avant du moteur. Le tambour d'entraînement 6 comporte à sa périphérie des aubes mobiles 61 s'étendant radialement vers l'extérieur, les éléments d'interface primaire 12 et secondaire 13 ainsi que les liaisons sécables 111, 131 du dispositif de découplage 10 étant représentés partiellement sur la figure 5B.

Les moyens de rétention 40 selon cette deuxième forme de réalisation de l'invention comportent une virole annulaire pleine 42 s'étendant radialement vers l'intérieur depuis le carter de intermédiaire 5 et une pluralité de doigts de rétention 43 s'étendant radialement vers l'extérieur et qui sont reliés à la virole annulaire pleine 42. A titre d'exemple, comme représenté sur les figures 4 et 5B, seize doigts de rétention 43 sont répartis angulairement sur la virole annulaire pleine 42 et comprennent chacun une partie radiale 431 et une partie longitudinale 432 pour former un L dont l'extrémité aval de la partie longitudinale 432 est reliée à la virole annulaire pleine 42 par une liaison articulée 44, ici une liaison pivot 44, comme représenté sur la figure 4. La partie radiale 431 du doigt de rétention 43 qui s'étend radialement vers l'extérieur est parallèle à la virole annulaire pleine 42 et décalée vers l'amont par rapport à cette dernière.

La liaison articulée 44, formée entre chaque doigt de rétention 43 et la virole annulaire 42, permet de définir une position de montage et une position de fonctionnement. En référence à la figure 4 représentant un doigt de rétention 43 en positon de montage, ce dernier est monté pivotant par rapport à la virole 42 autour d'un axe s'étendant tangentiellement à la virole 42 du moteur de manière à pouvoir s'étendre soit obliquement vers l'intérieur comme représenté sur la figure 4, soit longitudinalement en position de fonctionnement.

Grâce à cette liaison articulée 44, le tambour d'entraînement 6 peut être facilement monté dans le moteur en aval des doigts de rétention 43 qui sont abaissés en position de montage lors de l'introduction du tambour 6 depuis l'amont. Une fois le tambour d'entraînement 6 mis en place, les doigts de rétention 43 sont remontés en position de fonctionnement de manière à retenir axialement le tambour 6 en cas de rupture de l'arbre basse pression 2 de manière similaire à la première forme de réalisation. De manière avantageuse, la commande des positions des doigts de rétention 43 est réalisée via des organes de commande 7, tels que des renvois d'angle, s'étendant dans le carter de séparation 15 comme représenté sur la figure 4. De préférence, ces organes de commande 7 s'étendent dans les bras radiaux 59 du moteur 1 entre le moyeu 58 du carter intermédiaire 5 et sa virole extérieure 51. Selon une variante, il existe autant de doigts de rétention 43 que de bras radiaux 59.

La surface extérieure de la partie longitudinale 432 et la surface aval de la partie radiale 431 des doigts de rétention 43 sont recouverts d'un revêtement abradable 41 de manière à amortir aussi bien un choc axial qu'un choc radial comme détaillé précédemment.

En position de fonctionnement, l'extrémité extérieure de la partie radiale 431 du doigt de rétention 43 est radialement extérieure à l'extrémité aval 63 du tambour d'entraînement 6 de manière à ce que, en cas de rupture de l'arbre basse pression 2, le tambour d'entraînement 6 se déplace axialement vers l'amont, l'extrémité aval 63 du tambour d'entraînement 6 entrant en contact avec la partie radiale 431 des doigts de rétention 43 empêchant ainsi l'éjection du tambour 6 et de sa soufflante 4.

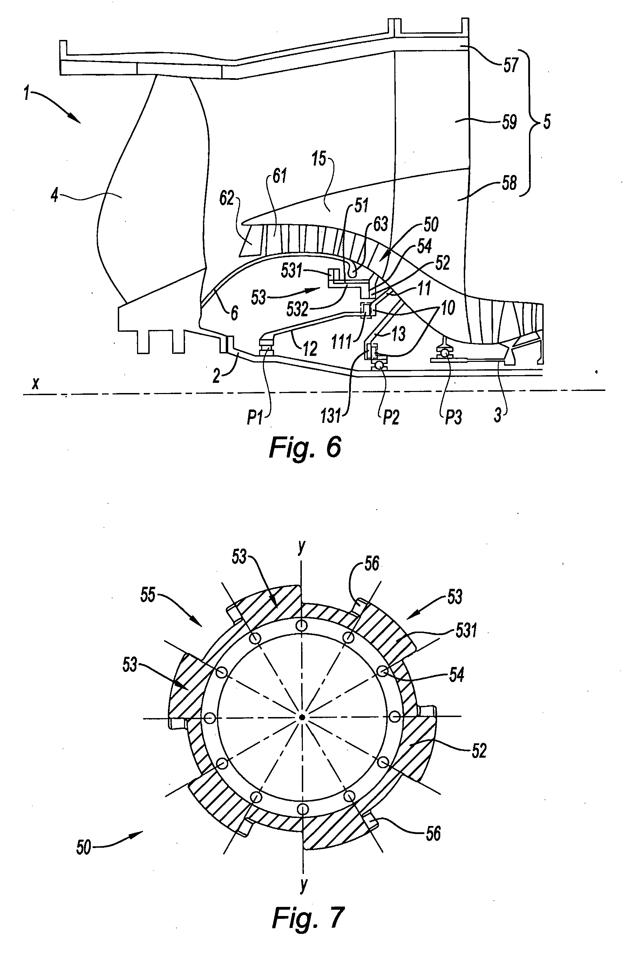

Selon une troisième forme de réalisation, en référence aux figures 6 et 7, le tambour d'entraînement 6 possède une extrémité aval 63 formant une couronne annulaire s'étendant radialement vers l'intérieur du moteur 1. Comme représenté sur la figure 7, les moyens de rétention 50 selon cette troisième forme de réalisation de l'invention comportent une virole annulaire 52 s'étendant radialement vers l'intérieur depuis le carter de séparation 15 et une pluralité de doigts de rétention 53 s'étendant radialement vers l'extérieur et qui sont reliés à la virole annulaire 52.

Autrement dit, les moyens de rétention 50 comportent un cylindre 532 s'étendant longitudinalement dont l'extrémité aval est reliée à la virole annulaire 52 par une liaison boulonnée 54 et dont l'extrémité amont est reliée à une couronne annulaire crénelée s'étendant radialement vers l'extérieur depuis l'extrémité amont du cylindre longitudinal 532. Cette couronne annulaire crénelée comprend des dents, formant les doigts de rétention 53, s'étendant radialement vers l'extérieur qui sont séparées par des ouvertures de rétention 55. A titre d'exemple, comme représenté sur la figure 7, six doigts de rétention 53 sont répartis angulairement sur la virole annulaire pleine 52 et comprennent chacun une partie radiale 531 et une partie longitudinale 532 pour former un L dont l'extrémité aval de la partie longitudinale 532 est reliée à la virole annulaire pleine 52. La partie radiale 531 du doigt de rétention 53 qui s'étend radialement vers l'extérieur est parallèle à la virole annulaire pleine 52 et décalée vers l'amont par rapport à cette dernière.

Comme représenté sur les figures 6 et 7, l'extrémité extérieure de la partie radiale 531 du doigt de rétention 53 est radialement extérieure à l'extrémité aval 63 du tambour d'entraînement 6 de manière à ce que, en cas de rupture de l'arbre basse pression 2, le tambour d'entraînement 6 se déplace axialement vers l'aval de sorte que son extrémité aval 63 entre en contact avec la partie radiale 531 des doigts de rétention 53 empêchant ainsi l'éjection du tambour 6 et de la soufflante 4.

La surface extérieure du cylindre longitudinal 532 et la surface aval 531 des doigts de rétention 53 sont recouverts d'un revêtement abradable 51 de manière à amortir aussi bien un choc axial qu'un choc radial comme détaillé précédemment.

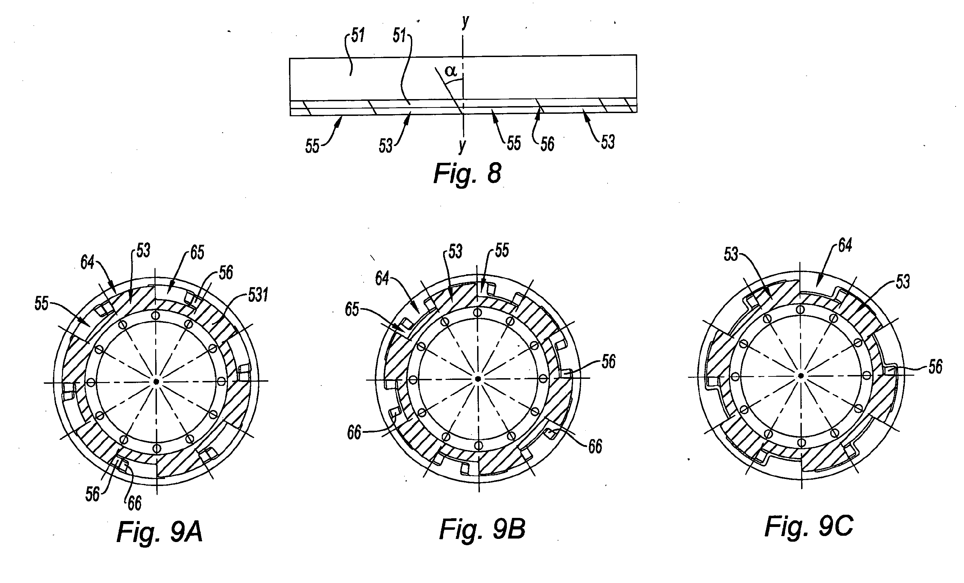

En référence plus particulièrement à la figure 8 représentant une vue de dessus des doigts de rétention 53, ces derniers sont inclinés de manière à permettre un montage aisé du tambour d'entraînement 6 tout en permettant une rétention axiale fiable. La surface latérale 56 d'un doigt de rétention 53 est ici inclinée par rapport à un plan axial Y-Y du moteur 1 passant par ledit doigt 53 comme représenté sur la figure 7, l'angle formé entre la surface latérale 53 et ledit plan axial Y-Y étant désigné angle d'inclinaison α des doigts de rétention 53. Dans cet exemple, l'angle d'inclinaison α des doigts de rétention est compris entre 10° et 50°.

En référence aux figures 7 et 8, les doigts de rétention 53 sont inclinés dans le sens antihoraire vu de l'avant, c'est-à-dire que la partie aval des doigts de rétention 53 est décalée angulairement dans le sens antihoraire par rapport à sa partie amont. De manière préférée, l'orientation horaire ou antihoraire des doigts de rétention 53 est définie en fonction du sens de rotation de l'arbre basse pression 2 et de son tambour d'entraînement 6. De manière avantageuse, l'orientation des doigts de rétention 53 est la même que le sens de rotation de l'arbre basse pression 2 de manière à limiter tout défaut de rétention comme cela sera détaillé par la suite. Ainsi, pour un arbre basse pression 2 rotatif dans le sens antihoraire vu de l'avant (ou dans le sens horaire vu de l'arrière), les doigts de rétention 53 sont orientés dans le sens antihoraire vu de l'avant.

Selon cette troisième forme de réalisation, l'extrémité aval 63 se présente sous la forme d'une couronne annulaire crénelée 63 comportant des dents de butée 64, s'étendant radialement vers l'intérieur, qui sont séparées par des ouvertures de butée 65 comme représenté sur les figures 9A-C. Dans cet exemple, les dimensions des dents de butée 64 et des ouvertures de butée 65 sont respectivement configurées pour correspondre avec les ouvertures de rétention 54 et les doigts de rétention 53 par complémentarité de formes.

De manière similaire aux doigts de rétention 53, les dents de butée 64 sont inclinées. La surface latérale 66 des dents de butée 64 est ici inclinée par rapport à l'axe du moteur 1. En référence aux figures 9A-C, les dents de butée 64 sont inclinées dans le sens antihoraire vu de l'avant, c'est-à-dire que la partie aval des dents de butée 64 est décalée angulairement dans le sens antihoraire vu de l'avant par rapport à sa partie amont. L'angle d'inclinaison α des dents de butée 64 et des doigts de rétention 53 est dans cet exemple identique, leurs surfaces latérales respectives 66, 56 étant parallèles pour leur permettre de coopérer par translation selon un axe de montage oblique à l'axe X du moteur. L'angle formé entre ledit axe oblique et l'axe du moteur correspondant à l'angle d'inclinaison α. Ainsi, toute translation axiale entre le tambour d'entraînement 6 et les moyens de rétention 50 est interdite ce qui assure la fiabilité de la rétention axiale.

De manière générale, l'arbre d'entraînement 2 est ici agencé pour être entraîné en rotation au cours de son fonctionnement dans le sens horaire vu de l'arrière. Pour monter le tambour 6, on déplace le tambour 6 de l'amont vers l'aval dans le moteur 1 en le faisant tourner dans le sens antihoraire vu de l'avant (ou sens horaire vu de l'arrière), c'est-à-dire dans le même sens de rotation que l'arbre en conditions d'utilisation. En fin de montage, les dents de butée 64 sont placées en aval des doigts de rétention 53.

En cas de rupture de l'arbre 2 en aval de la soufflante, le tambour 6 se déplace vers l'amont tout en continuant à tourner dans le sens antihoraire vu de l'avant ce qui interdit la coopération des doigts de rétention 53 avec les ouvertures 65 du tambour 6.

Autrement dit, l'inclinaison des dents de butée 64 et des doigts de rétention 53 (sens antihoraire vu de l'avant) est définie par rapport au sens de rotation de l'arbre 2 en fonctionnement (sens antihoraire vu de l'avant) afin d'empêcher tout défaut de rétention en cas de rupture de l'arbre 2.

De manière détaillée, pour monter le tambour d'entraînement 6 dans le moteur, le tambour 6 est déplacé axialement depuis l'avant du moteur, de l'amont vers l'aval, de manière à ce que les dents de butée 64 soient sensiblement alignées avec les ouvertures de rétention 55 séparant les doigts de rétention 53. Ensuite, le tambour d'entraînement 6 est pivoté obliquement de la valeur de l'angle d'inclinaison α puis déplacé en aval de manière à ce que les dents de butée 64 traversent les ouvertures de rétention 55 pour se positionner en aval des doigts de rétention 53 par glissement. A cet effet, au cours du déplacement aval selon la direction oblique, le tambour d'entraînement 6 est entraîné légèrement en rotation dans le sens antihoraire vu de l'avant. Ensuite, le tambour d'entraînement 6 est de nouveau orienté axialement de manière à pouvoir être entraîné par l'arbre basse pression 2. Au final, les doigts de rétention 53 se trouvent en regard de la partie bombée du tambour d'entraînement 6. Selon une variante, les arêtes de l'extrémité aval 63 du tambour et/ou celles des moyens de rétention 50 sont rayonnées afin de faciliter le glissement des dents de butée 64 avec les ouvertures de rétention 55.

En référence aux figures 9A, 9B et 9C, au cours de la rotation du tambour d'entraînement 6 dans le sens antihoraire vu de l'avant, les doigts de rétention 53 sont en attente à l'intérieur du tambour 6. En cas de rupture de l'arbre basse pression 2, le tambour d'entraînement 6 se déplace axialement vers l'amont et les doigts de rétention 53 entrent en butée avec les dents de butée 64.

Selon la position représentée sur la figure 9A, les doigts de rétention 53 sont alignés avec les dents de butée 64 ce qui permet de retenir axialement le tambour d'entraînement 6, selon toute la surface aval des doigts de rétention 53.

Selon la position représentée sur la figure 9B, les doigts de rétention 53 sont décalés angulairement avec les dents de butée 64 ce qui permet de retenir axialement le tambour d'entraînement 6 selon une partie de la surface aval des doigts de rétention 53 ce qui suffit à empêcher son éjection.

Selon la position représentée sur la figure 9C, les doigts de rétention 53 sont alignés angulairement avec les ouvertures de butée 65, l'inclinaison des doigts de rétention 53 permettant de retenir axialement le tambour d'entraînement 6. En outre, comme le tambour d'entraînement 6 a tendance à tourner dans le même sens que son arbre basse pression 2 en mode hypercritique, le tambour 6 est naturellement entraîné dans le sens horaire ce qui s'oppose à une coopération des dents de butée 64 avec les doigts de rétention 53. L'éjection du tambour d'entraînement 6 en aval des doigts de rétention 53 est ainsi empêchée et, ce, pour toute position angulaire.

Dans cet exemple, les doigts de rétention 53 du tambour 6 sont équidistants et il en est de même des dents de butée 64. Selon une variante, les doigts de rétention du tambour ainsi que les dents de butée sont dissymétriques ce qui permet de limiter des vibrations liées aux chocs en mode hypercritique. En effet, avec un espacement identique entre les doigts de rétention du tambour génère une vibration dont la fréquence est proportionnelle au nombre de doigts. Avec un espacement variable, un choc ne survient qu'à chaque tour, la vibration liée aux chocs est diminuée.

L'invention a été décrite dans les formes de réalisation avec quatre, six ou seize doigts de rétention mais il va de soi que le nombre de doigts pourrait être différent.

## Revendications

1. Moteur à turbine à gaz comprenant un carter (5, 15) dans lequel est monté au moins un arbre (2) d'entraînement d'une soufflante (4) solidaire d'un tambour d'entraînement (6) muni d'aubes (61) pour compresser un flux d'air circulant d'amont en aval dans le moteur, moteur **caractérisé par le fait qu'**il comprend des moyens de rétention axiale (30 ; 40 ; 50), en attente, solidaires du carter (5, 15) et agencés pour entrer en contact avec le tambour d'entraînement (6) de manière à empêcher un déplacement axial dudit tambour (6) en cas de rupture de l'arbre d'entraînement (2).

2. Moteur selon la revendication 1, dans lequel le tambour d'entraînement (6) comporte des moyens de butée agencés pour entrer en contact avec les moyens de rétention axiale (30 ; 40 ; 50), les moyens de butée étant formés par une partie aval du tambour d'entraînement (6), de préférence, son extrémité aval (63).

3. Moteur selon la revendication 2, dans lequel les moyens de butée s'étendent radialement vers l'intérieur du moteur.

4. Moteur selon l'une des revendications 1 à 3, dans lequel les moyens de rétention axiale (30 ; 40 ; 50), en attente, s'étendent à l'intérieur du tambour d'entraînement (6).

5. Moteur selon la revendication 4, dans lequel, le tambour d'entraînement (6) comportant une partie bombée radialement, les moyens de rétention axiale (30 ; 40 ; 50), en attente, sont en regard de la partie bombée.

6. Moteur selon l'une des revendications 1 à 5, dans lequel les moyens de rétention axiale (30 ; 40 ; 50) comprennent au moins un doigt de rétention (33 ; 43 ; 53) aligné longitudinalement avec une partie aval du tambour d'entraînement (6) de manière à empêcher un déplacement axial dudit tambour (6) en cas de rupture de l'arbre d'entraînement (2).

7. Moteur selon l'une des revendications 1 à 6, dans lequel les moyens de rétention axiale (30 ; 40; 50) comportent un revêtement abradable (31 ; 41 ; 51) destiné à entrer en contact avec le tambour d'entraînement (6).

8. Moteur selon l'une des revendications 6 à 7, dans lequel le doigt de rétention (43) est articulé par rapport au carter (5) de manière à définir :
- une position de montage, dans laquelle le doigt de rétention (43) est décalé radialement par rapport au tambour d'entraînement (6) de manière à permettre un déplacement axial dudit tambour (6), et
- une position de fonctionnement dans laquelle le doigt de rétention (43) est aligné longitudinalement avec le tambour d'entraînement (6) de manière à empêcher un déplacement axial dudit tambour (6) en cas de rupture de l'arbre d'entraînement (2).

9. Moteur selon l'une des revendications 6 à 8, dans lequel, les moyens de rétention (50) comportant une virole de rétention annulaire crénelée s'étendant radialement vers l'extérieur et comportant des doigts de rétention (53) séparés par des ouvertures de rétention (55), le tambour d'entraînement (6) comportant une virole de butée annulaire crénelée s'étendant radialement vers l'intérieur et comportant des dents de butée (64) séparées par des ouvertures de butée (65), les dents de butée (64) sont agencées pour entrer en contact avec les doigts de rétention (53) de manière à empêcher un déplacement axial dudit tambour (6) en cas de rupture de l'arbre d'entraînement (2).

10. Moteur selon la revendication 9, dans lequel au moins un doigt de rétention (53) est incliné par rapport à un plan axial traversant ledit doigt (53).

## Patentansprüche

1. Gasturbinenmotor, umfassend ein Gehäuse (5, 15), in dem mindestens eine Welle (2) zum Antreiben eines Gebläses (4) gelagert ist, das mit einer Antriebstrommel (6) fest verbunden ist, die mit Schaufeln (61) versehen ist, um einen Luftstrom, der in dem Motor von stromaufwärts nach stromabwärts zirkuliert, zu verdichten, wobei der Motor **dadurch gekennzeichnet ist, dass** er axiale Rückhaltemittel (30; 40; 50) umfasst, die, in Warteposition, mit dem Gehäuse (5, 15) fest verbunden sind und eingerichtet sind, um mit der Antriebstrommel (6) in Kontakt zu kommen, so dass sie eine axiale Bewegung der Trommel (6) bei einem Bruch der Antriebswelle (2) verhindern.

2. Motor nach Anspruch 1, wobei die Antriebstrommel (6) Anschlagmittel aufweist, die eingerichtet sind, um mit den axialen Rückhaltemittel (30; 40; 50) in Kontakt zu kommen, wobei die Anschlagmittel durch einen stromabwärtigen Teil der Antriebstrommel (6), vorzugsweise deren stromabwärtiges Ende (63), gebildet sind.

3. Motor nach Anspruch 2, wobei die Anschlagmittel sich in radialer Richtung zu dem Inneren des Motors hin erstrecken.

4. Motor nach einem der Ansprüche 1 bis 3, wobei die axialen Rückhaltemittel (30; 40; 50) sich, in Warteposition, in das Innere der Antriebstrommel (6) erstrecken.

5. Motor nach Anspruch 4, wobei, da die Antriebstrommel (6) einen in radialer Richtung gewölbten Teil aufweist, die axialen Rückhaltemittel (30; 40; 50), in Warteposition, dem gewölbten Teil zugewandt sind.

6. Motor nach Anspruch 1 bis 5, wobei die axialen Rückhaltemittel (30; 40; 50) mindestens einen Rückhaltefinger (33; 43; 53) umfassen, der in Längsrichtung mit einem stromabwärtigen Teil der Antriebstrommel (6) fluchtet, so dass er eine axiale Bewegung der Trommel (6) bei einem Bruch der Antriebswelle (2) verhindert.

7. Motor nach einem der Ansprüche 1 bis 6, wobei die axialen Rückhaltemittel (30; 40; 50) eine abriebfähige Beschichtung (31; 41; 51) aufweisen, die dazu bestimmt ist, mit der Antriebstrommel (6) in Kontakt zu kommen.

8. Motor nach Anspruch 6 bis 7, wobei der Rückhaltefinger (43) relativ zu dem Gehäuse (5) angelenkt ist, so dass er Folgendes definiert:
- eine Montageposition, in welcher der Rückhaltefinger (43) relativ zu der Antriebstrommel (6) in radialer Richtung versetzt ist, so dass er eine axiale Bewegung der Trommel (6) erlaubt, und
- eine Betriebsposition, in welcher der Rückhaltefinger (43) in Längsrichtung mit der Antriebstrommel (6) fluchtet, so dass er eine axiale Bewegung der Trommel (6) bei einem Bruch der Antriebswelle (2) verhindert.

9. Motor nach einem der Ansprüche 6 bis 8, wobei die Rückhaltemittel (50) eine mit Zähnen versehene ringförmige Rückhaltehülse aufweisen, die sich in radialer Richtung nach außen erstreckt und Rückhaltefinger (53) aufweist, die durch Rückhalteöffnungen (55) getrennt sind, wobei die Antriebstrommel (6) eine mit Zähnen versehene ringförmige Anschlaghülse aufweist, die sich in radialer Richtung nach innen erstreckt und Anschlagzähne (64) aufweist, die durch Anschlagöffnungen (65) getrennt sind, wobei die Anschlagzähne (64) eingerichtet sind, um mit den Rückhaltefingern (53) in Kontakt zu kommen, so dass sie eine axiale Bewegung der Trommel (6) bei einem Bruch der Antriebswelle (2) verhindern.

10. Motor nach Anspruch 9, wobei mindestens ein Rückhaltefinger (53) relativ zu einer axialen Ebene, die den Finger (53) durchquert, geneigt ist.

## Claims

1. Gas turbine engine including a casing (5, 15) in which there is at least one mounted shaft (2) for driving a fan (4) solidly connected to a driving drum (6) provided with blades (61) in order to compress an airflow moving from upstream to downstream in the engine, engine **characterized in that** it includes axial retention means (30; 40; 50), on standby, solidly connected to the casing (5, 15) and arranged to come into contact with the driving drum (6) so as to prevent the axial movement of the said drum (6) in the event of breakage of the driving shaft (2).

2. Engine according to claim 1, in which the driving drum (6) has stop means arranged so as to come into contact with the axial retention means (30; 40; 50), the stop means being formed by a downstream part of the driving drum (6), preferably its downstream end (63).

3. Engine according to claim 2, in which the stop means extend radially towards the inside of the engine.

4. Engine according to any of the claims 1 to 3, in which the axial retention means (30; 40; 50), on standby, extend into the driving drum (6).

5. Engine according to claim 4, in which, the driving drum (6) having a radially convex part, the axial retention means (30; 40; 50), on standby, face the convex part.

6. Engine according to any of the claims 1 to 5, in which the axial retention means (30; 40; 50) include at least one retention dog (33; 43; 53) longitudinally aligned with a downstream part of the driving drum (6) so as to prevent the axial movement of the said drum (6) in the event of breakage of the driving shaft (2).

7. Engine according to any of the claims 1 to 6, in which the axial retention means (30; 40; 50) have an abradable coating (31; 41; 51) intended to come into contact with the driving drum (6).

8. Engine according to claim 6 or 7, in which the retention dog (43) is articulated with respect to the casing (5) so as to define:
- a mounting position in which the retention dog (43) is radially shifted with respect to the driving drum (6) so as to enable an axial movement of the said drum (6); and
- a working position in which the retention dog (43) is longitudinally aligned with the driving drum (6) so as to prevent the axial movement of the said drum (6) in the event of breakage of the driving shaft (2).

9. Engine according to any of the claims 6 to 8, in which, the retention means (50) comprising a crenellated annular retention ring extending radially outwards and having retention dogs (53) separated by retention openings (55), the driving drum (6) comprising a crenellated annular stop ring extending radially inwards and having stop teeth (64) separated by stop openings (65), the stop teeth (64) are arranged to come into contact with the retention dogs (53) so as to prevent the axial movement of the said drum (6) in the event of breakage of the driving shaft (2).

10. Engine according to claim 9, in which at least one retention dog (53) is inclined with reference to an axial plane crossing the said dog (53).
